Europäisches Patentamt

European Patent Office

Office européen des brevets

(19)

(11) **EP 1 467 366 A1**

(12) **EUROPEAN PATENT APPLICATION**
published in accordance with Art. 158(3) EPC

(43) Date of publication:
**13.10.2004 Bulletin 2004/42**

(51) Int Cl.⁷: **G11B 20/10**, G11B 7/30,
G11B 11/105, G06F 12/14

(21) Application number: **03701056.8**

(22) Date of filing: **10.01.2003**

(86) International application number:
**PCT/JP2003/000144**

(87) International publication number:
**WO 2003/060911 (24.07.2003 Gazette 2003/30)**

(84) Designated Contracting States:
**AT BE BG CH CY CZ DE DK EE ES FI FR GB GR
IE IT LI LU MC NL PT SE SI SK TR**
Designated Extension States:
**AL LT LV MK RO**

(30) Priority: **11.01.2002 WOPCT/JP02/00160**

(71) Applicant: **FUJITSU LIMITED**
**Kawasaki-shi, Kanagawa 211-8588 (JP)**

(72) Inventors:
• **AOYAMA, Nobuhide, c/o FUJITSU LIMITED**
**Kawasaki-shi, Kanagawa 211-8588 (JP)**

• **AKIYAMA, Ryota, c/o FUJITSU LIMITED**
**Kawasaki-shi, Kanagawa 211-8588 (JP)**
• **MORIMOTO, Yasuaki, c/o FUJITSU LIMITED**
**Kawasaki-shi, Kanagawa 211-8588 (JP)**

(74) Representative: **Stebbing, Timothy Charles**
**Haseltine Lake,**
**Imperial House,**
**15-19 Kingsway**
**London WC2B 6UD (GB)**

(54) **SECURITY SYSTEM USING OPTICAL INFORMATION RECORDING MEDIUM**

(57)   A security system of the present invention using an optical information recording medium allowing concurrent reading out of ROM-RAM information, is able to receive data from the optical information recording medium having an identification symbol recording region recording an identification symbol identifying the medium, a ROM region recording plain text data, and a magneto-optical recording film formed in a region corresponding to the ROM region, the magneto-optical recording film recording encrypted data of the plain text data, the security system being configured such that the recording medium recording a decryption program for decrypting the encrypted data is usable, the security system comprising a reception unit for receiving the encrypted data in response to a data transmission request that conforms to the identification symbol identifying the optical information recording medium; a recording unit for recording in the recording medium the encrypted data received from the reception unit; and a decryption unit for decrypting with the decryption program the encrypted data recorded in the recording medium.

FIG. 7

```
        START
          |
DISTRIBUTE RAM
  RECORDING      P1
  MEDIUM IN
   ADVANCE
          |
SEND MEDIUM
IDENTIFICATION   P2
 SYMBOL TO
SENDING SIDE
          |
   DELIVER       P3
ENCRYPTED DATA
          |
WRITE RECEIVED   P4
DATA TO RAM AREA
          |
LOAD DECRYPTION  P5
  PROGRAM
          |
READ OUT AND
DECRYPT RAM AREA P6
    DATA
          |
  SEND OUT       P7
DECRYPTED DATA
          |
        END
```

EP 1 467 366 A1

**Description**

BACKGROUND OF THE INVENTION

TECHNICAL FIELD

The present invention relates to a security system using an optical information recording medium, and more particularly, to a security system using an optical information recording medium capable of concurrent ROM-RAM reproduction.

PRIOR ART

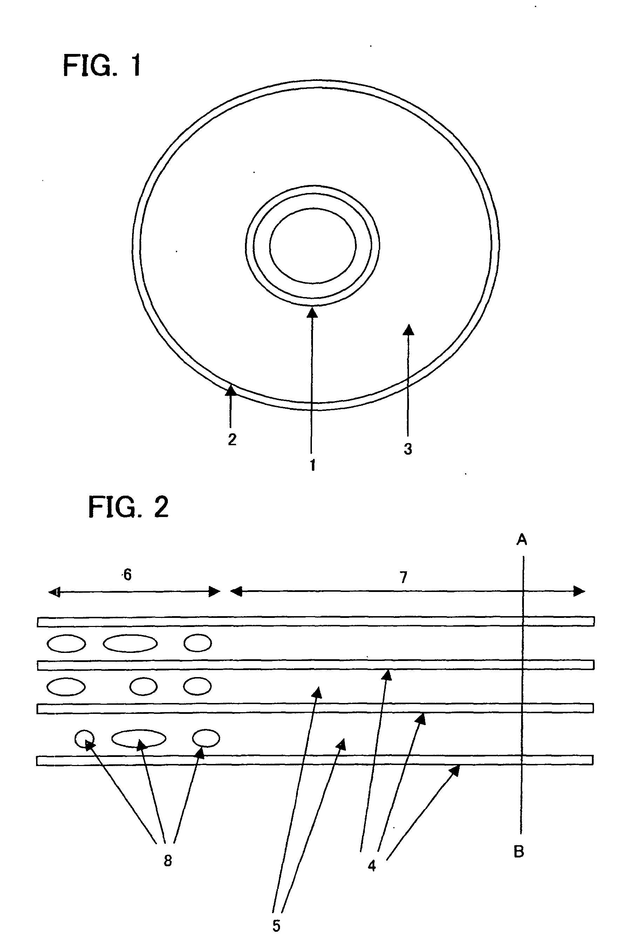

Today, research and development are being actively advanced in terms of high-density recording/reproducing and high-speed accessing for magneto-optical disk memory. Fig. 1 shows a recording medium conforming with the ISO standard and, more specifically, a plan view of a magneto-optical disk as an example. A read-in 1 and a read-out 2 provide ROM information consisting of phase pits according to a principle that pits and projections formed on a polycarbonate substrate are reflected using a reflection film, and information such as specifications of the disk is recorded in them. An apparatus controls conditions for recording/reproducing by reading the information.

The optical depth (pit depth) of the phase pit providing this ROM information is set such that beam intensity modulation during reproduction is maximized. Generally, the depth is set such that the degree of modulation (i.e. the ratio of variation of the beam intensity at a phase pit potion to the beam intensity of a flat portion on which no groove, pit or projection is formed) is 70% or above.

Between the read-in 1 and the read-out 2, there is a user area 3 where a magneto-optical recording film is formed by a sputtering apparatus. A user can record freely information in the user area 3.

Fig. 2 shows a portion of an enlarged plan view of the user area 3. Each land 5 sandwiched respectively by grooves. 4 to be tracking guides has phase pits 8 constituting a header portion 6 and a user data portion 7. Information on the header portion 6 consists of a sector mark, a VFO, an ID, etc. according to a sector format.

The user data portion 7 consists of the plane lands 5 and each sandwiched respectively by grooves 4, and records a magneto-optical signal. Recording of a magneto-optical signal is executed by supporting the magnetization inversion using heating by a laser beam on the magneto-optical recording film, inverting the direction of magnetization in response to signals.

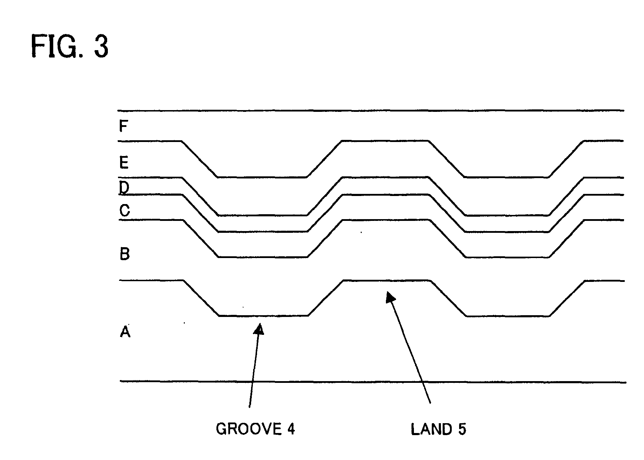

Fig. 3 shows a conceptual structure of a cross-section of the user area along the direction of a radius, i.e., along the line A-B in Fig. 2. The user area is constituted by stacking a substrate A made from polycarbonate etc., a dielectric film B, a magneto-optical recording film C made from TbFeCo etc., a dielectric film D, an Al film E and a UV-cured film F as a protecting layer.

Fig. 3 is prepared by amending Fig. 2, according to a recent magneto-optical disk. That is, in Fig. 3, in order to execute magneto-optical recording also in area of the grooves 4, the groove is shown to have a same width as the width of the area of the land 5 in the direction of the radius.

When recorded information is read out, when a weak laser beam is radiated, the orientation of the polarization plane of the laser beam is varied in response to the direction of magnetization of the recording layer under polar Kerr effect, and whether data exist or not is determined from whether the polarized component of a reflected beam at this time is strong or weak. Thereby, reading out of RAM information is possible.

Research and development for utilizing such characteristics of the magneto-optical disk memory are advanced. For example, the Japanese Patent Application Laid-Open Publication No. 1994-202820 and a report in the Journal of the Television Society, vol. 46, No. 10, pp. 1319-1324 (1992) disclose a concurrent ROM (Read Only Memory)-RAM (Random Access Memory) optical disk capable of being reproduced concurrently (hereinafter, referred to as "optical information recording medium").

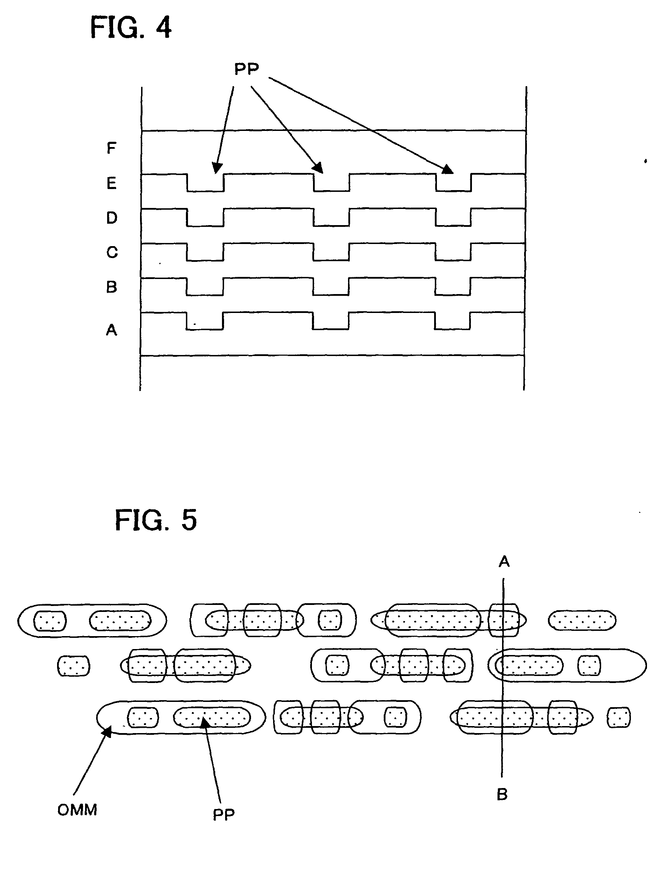

Such an optical information recording ROM-RAM medium capable of being reproduced concurrently has a cross-sectional structure along the direction of the radius shown in Fig. 4 and is constituted, as an example, by stacking the substrate A made from polycarbonate etc., the dielectric film B, the magneto-optical recording film C made from TbFeCo etc., the dielectric film D, the Al film E and the UV-cured film F as a protecting layer.

In the optical information recording medium having such a structure, as shown in Fig. 5, ROM information is recorded fixedly by phase pits PP and RAM information is recorded on rows of the phase pits PP with magneto-optical recording OMM. A cross-section along the A-B line in the direction of the radius in Fig. 5 coincides with the view of Fig. 4. It is to be noted that, in the example shown in Fig. 5, since the lines of the phase pits PP serve as tracking guides, the grooves in Figs. 2 and 3 are not provided.

SUMMARY OF THE INVENTION

It is therefore an object of the present invention to provide a security system that, taking advantage of such features of the optical information recording medium, can ensure security during data transmission or output display.

Thus, a first aspect of the security system using an optical information recording medium to achieve the above object of the present invention is a security system capable of receiving data from the optical information recording medium having an identification symbol recording region recording an identification symbol identifying the medium, a ROM region recording plain text data, and a magneto-optical recording film formed in a region corresponding to the ROM region, the magneto-optical recording film recording encrypted data of the plain text data, the security system being configured such that the recording medium recording a decryption program for decrypting the encrypted data is usable, the security system comprising a reception unit for receiving the encrypted data in response to a data transmission request that conforms to the identification symbol identifying the optical information recording medium; a recording unit for recording in the recording medium the encrypted data received from the reception unit; and a decryption unit for decrypting with the decryption program the encrypted data recorded in the recording medium.

A second aspect of the security system using an optical information recording medium to achieve the above object of the present invention is the security system according to the first aspect wherein the encrypted data is decrypted using key data stored in the recording medium.

A third aspect of the security system using an optical information recording medium to achieve the above object of the present invention is the security system according to the first aspect wherein the security system is further configured to transmit data in the optical information recording medium using the optical information recording medium, wherein the security system further comprises an encryption unit for encrypting plain text data read out from the ROM region of the optical information recording medium, and a comparison unit for comparing encrypted data encrypted by the encryption unit with the encrypted data stored in the optical information recording medium, and wherein when the comparison unit detects a match, the encrypted data stored in the optical information recording medium is transmitted.

A fourth aspect of the security system using an optical information recording medium to achieve the above object of the present invention is the security system according to the third aspect wherein match detection by the comparison unit between encrypted data and the encrypted data stored in the optical information recording medium is conducted on a frame-by-frame basis of the plain text data.

A fifth aspect of the security system using an optical information recording medium to achieve the above object of the present invention is a security system using an optical information recording medium, capable of using the optical information recording medium having a substrate with a ROM region where phase pits serving as a ROM signal are formed and a magneto-optical recording film formed in a region corresponding to the ROM region of the substrate, the optical information recording medium retaining plain text data stably recorded in the ROM region and encrypted data corresponding to the plain text data recorded in the magneto-optical recording film, the security system further comprising an encryption processing verification module, which includes for verification of encryption processing of the plain text data, an encryption unit for encrypting plain text data read out from the ROM region, and a comparison unit for comparing encrypted data encrypted by the encryption unit with the encrypted data stored in the magneto-optical recording film.

A sixth aspect of the security system using an optical information recording medium to achieve the above object of the present invention is a security system using an optical information recording medium having a substrate with a ROM region where phase pits serving as a ROM signal are formed and a magneto-optical recording film formed in a region corresponding to the ROM region of the substrate, the optical information recording medium retaining data stationary stored in the ROM region and checksums of the data recorded in the magneto-optical recording film, the security system further comprising a plain text tampering verification module, which includes for verification of tampering of the data, a checksum processing unit for reading out data from the ROM region and calculating checksums, and a comparison unit for comparing the checksums calculated by the checksum processing unit and the checksums stored in the magneto-optical recording film.

A seventh aspect of the security system using an optical information recording medium to achieve the above object of the present invention is a security system using an optical information recording medium having a substrate with a ROM region where phase pits serving as a ROM signal are formed and a magneto-optical recording film formed in a region corresponding to the ROM region of the substrate, the optical information recording medium retaining data stably recorded in the ROM region and passwords for the data recorded in the magneto-optical recording film, the security system further comprising a password verification module which includes at least a comparison unit for comparing the passwords stored in the magneto-optical recording film with a password entered by a user, wherein when a password match is detected by the comparison unit, data is sent out from the ROM region of the optical information recording medium.

An eighth aspect of the security system using an optical information recording medium to achieve the above object of the present invention is the security system according to the seventh aspect wherein the passwords stored in the magneto-optical recording film of the optical information recording medium are watermarks of data bits of the data stored in the ROM region of the optical information recording medium, and wherein when a password match is detected by the comparison unit, the data and the watermarks are combined and sent out.

A ninth aspect of the security system using an optical information recording medium to achieve the above object of the present invention is the security system according to the first aspect wherein the recording medium has a non-access area inaccessible by users, which stores at least one of the decryption program and key data.

A tenth aspect of the security system using an optical information recording medium to achieve the above object of the present invention is a security system capable of using an optical information recording medium having a ROM region where phase pits serving as a ROM signal are formed and a magneto-optical recording film formed in a region corresponding to the ROM region, the optical information recording medium including an identification symbol recording region where an identification symbol identifying the medium is recorded, the optical information recording medium retaining plain text data stably recorded in the ROM region and encrypted data of the plain text data recorded in the magneto-optical recording film, the security system comprising a transmission unit for transmitting the encrypted data recorded in the magneto-optical recording film in response to a data transmission request that conform to the identification symbol identifying the optical information recording medium.

An eleventh aspect of the security system using an optical information recording medium to achieve the above object of the present invention is the security system according to the tenth aspect, wherein the optical information recording medium has a non-access area inaccessible by users, which stores at least one of encryption program, decryption program and key data.

A twelfth aspect of the security system using an optical information recording medium to achieve the above object of the present invention is a security system capable of using an optical information recording medium having a ROM region where phase pits serving as ROM signal are formed and a magneto-optical recording film formed in a region corresponding to the ROM region, the security system comprising an encryption processing unit for encrypting plain text data of ROM signal read out from the optical information recording medium; and a recording unit for recording the data encrypted by the encryption processing unit in the magneto-optical recording film of the optical information recording medium.

Features of the present invention will become more apparent from the following embodiments described with reference to the accompanying drawings.

BRIEF DESCRIPTION OF THE DRAWINGS

Fig. 1 is a plan view of a magneto-optical disk as an example of ISO Standard-compliant medium.
Fig. 2 is part of an enlarged plan view of a user area 3 in a magneto-optical disk memory shown in Fig. 1.
Fig. 3 is a view showing a sectional construction in the direction of the radius along line A-B in Fig. 2.

Fig. 4 is a view showing a sectional construction of an optical information recording medium capable of concurrent reproduction of ROM-RAM.
Fig. 5 is a view describing ROM and RAM information recording in the optical information recording medium having the construction of Fig. 4.
Figs. 6A and 6B are views describing a conceptual configuration of a security system using an optical information recording medium in which the present invention is applied to its encryption technique.
Fig. 7 is an operational flowchart of the system in Figs. 6A and 6B.
Fig. 8 is a configuration example to examine encrypted data.
Fig. 9 is a first embodiment of a security system whose optical information recording medium itself is distributed to users.
Fig. 10 is an example of using the present invention for genuine user authentication.
Fig. 11 is an application example in which the embodiment of Fig. 10 has undergone further development.
Fig. 12 is a block diagram of an embodiment configuration of a storage apparatus that allows concurrent ROM and RAM information readout from an optical information recording medium.
Fig. 13 is a view describing focus error sensing (FES) and track error sensing (TES) methods using a 4-part photodetector 22 and based on its output.
Fig. 14 is a view showing a detailed configuration example of a main controller 15.
Fig. 15 is a view showing combinations of ROM1, ROM2 and RAM detection in each mode.

DESCRIPTION OF EMBODIMENTS OF THE INVENTION

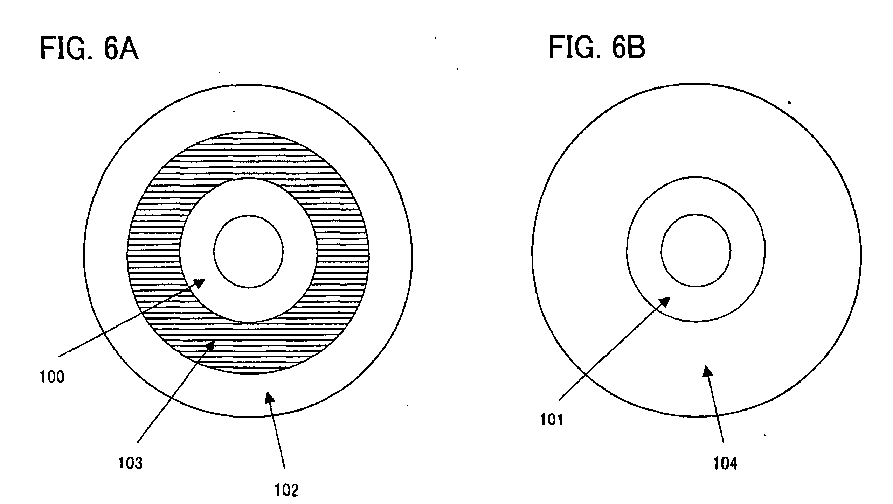

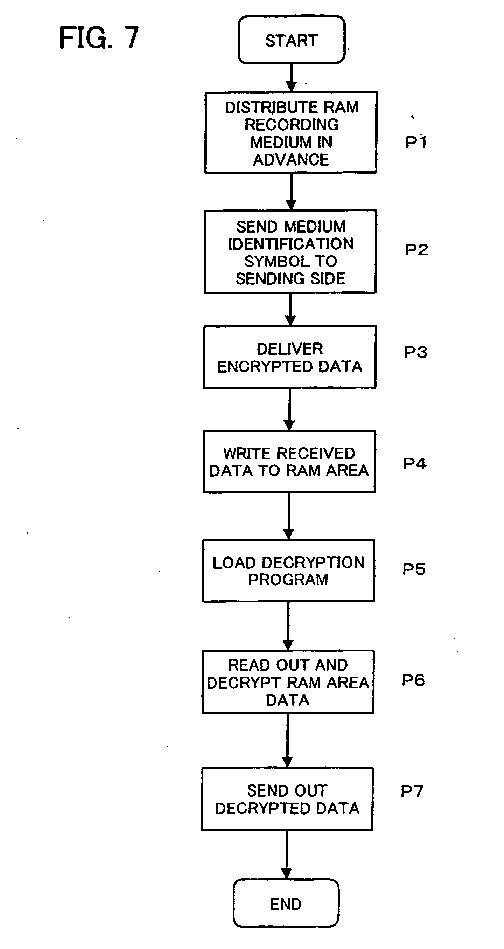

Fig. 6 is a view describing a conceptual configuration of a security system using an optical information recording medium in which the present invention is applied to its encryption technique. Fig. 7 is an operational flowchart of the system in Fig. 6.

A sending system is provided with an original optical information recording medium (Fig. 6A) capable of concurrent ROM-RAM reproduction described in Figs. 4 and 5. The disk-shaped optical information recording medium shown in Fig. 6A comprises a non-access area 100, managed by a drive controller so as to be inaccessible by users' specification of the area with a (host) command, a ROM region 102 for stationarily storing ROM signal and a magneto-optical recording film 103 arranged correspondingly with the ROM region 102.

It is to be noted that the ROM region 102 and the magneto-optical recording film 103 are illustrated as if they are arranged concentrically at different regions in the drawing of the optical information recording medium capable of concurrent ROM-RAM reproduction. Indeed, the magneto-optical recording film is, however, formed on top of the ROM region 102, as a RAM region. This is true for the following embodiments.

As an embodiment, a medium identification symbol (ID) identifying the optical information recording medium itself and original text data are stationarily recorded in the ROM region 102 as is in the form of plain text data. Encrypted data of plain text data is recorded in the magneto-optical recording film 103 as RAM signal.

Further, an encryption program for the encryption, a decryption program corresponding to the encryption program and key data for invoking the decryption program are recorded in the non-access area 100.

Here, encrypted data can be generated in a variety of ways. For example, encrypted data can be generated by Triple Des and others.

Fig. 6B shows a duplicate such as magneto-optical recording medium (MO) or a RAM storage medium for duplication having a non-access area 101 storing the decryption program and the same data as the key data for launching the decryption program and a RAM area 104.

The system operation will be described with reference to Fig. 7. The sending system is equipped with the optical information recording medium shown in Fig. 6A, whereas the RAM storage medium of Fig. 6B is provided to the receiving system in advance (processing step P1). The RAM storage medium can be provided in various manners. The RAM storage medium may be created by downloading or installing the decryption program and the key data upon request from the sending side to the receiving side or be made available by purchase in advance by the receiver.

The receiving side sends a medium ID to the sending side, requesting data transmission (processing step P2). Using the received medium ID, the sending side can identify the optical information recording medium matching the medium ID stored in the ROM region 102.

Therefore, the sending side reads out encrypted data stored in the RAM area - the magneto-optical recording film 103 of the identified optical information recording medium, delivering the data to the receiving side (processing step P3).

On the other hand, the receiving side records and stores the delivered encrypted data in the RAM area 104 of the duplicate or RAM storage medium for duplication (Fig. 6B) distributed beforehand (processing step P4). Next, the receiving side loads the decryption program stored in the non-access area 101 onto decryption means of the storage apparatus which will be described later (processing step P5). Further, the receiving side reads out encrypted data from the RAM area 104, decrypting the data with the decryption program in the decryption means (processing step P6) and sending out the data as decrypted data (processing step P7).

This makes it possible to send encrypted data to genuine users only and provide the intended plain text data through decryption by the users. Such a security system using optical information recording medium allows for the sending side to integrally manage original text data and corresponding encrypted data using the identical recording medium. Further, the sending side can immediately deliver corresponding encrypted data upon request for transmission from the receiving side by sending a medium ID.

Here, it is important that encrypted data delivered from the sending side to the receiving side in the aforementioned embodiment is normally encrypted data in order to impart credibility to the receiving side, namely, the user.

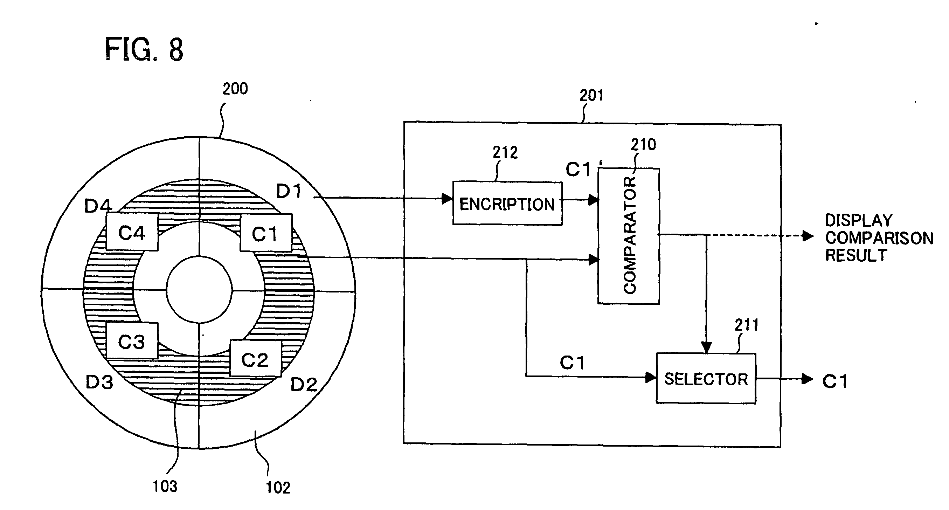

Fig. 8 is a configuration example to examine encrypted data delivered in light thereof. The sending side is provided with an encryption processing verification module 201. Further, plain text data (D1 to D4) is stationarily recorded in units of a frame in the ROM region 102 of an optical information recording medium 200 provided on the sending side. Encrypted data (C1 to C4) is recorded as RAM signal in the magneto-optical recording film 103 correspondingly with this plain text data.

Meanwhile, the encryption processing verification module 201, implementable in hardware or software form, reads out given frames of the plain text data D1 from the ROM region 102 for encryption using encryption means 212.

Next, a comparator 210 compares data C1' encrypted by the encryption means 212 and encrypted data C1 of the corresponding frame, stored in the magneto-optical recording film 103 and read out simultaneously with plain text data.

When the comparator 210 detects a match, the encrypted data.C1 stored in the magneto-optical recording film 103 is sent out, delivering the data to the receiving side that issued a request. On the other hand, if the comparator 210 does not detect a match, an alarm is output and displayed as a comparison result, with output of the encrypted data C1 blocked by a selector 211.

This makes it possible to verify plain text data and encrypted data while simultaneously reading out both pieces of data, thus allowing successively verifying before delivery to the receiving side, that encrypted data is properly encrypted in units of a frame correspondingly with plain text data. It is to be noted that the term "in units of a frame" includes in units of an image frame, in units of a music frame, and further in units of a block that can be processed by the host and others.

In the above embodiment, the sending side of the security system is provided with an optical information recording medium, with encrypted data delivered to the receiving side. However, application of the present invention is not limited thereto.

In the embodiment described below, a security system is taken for example in which an optical information recording medium itself is distributed to users.

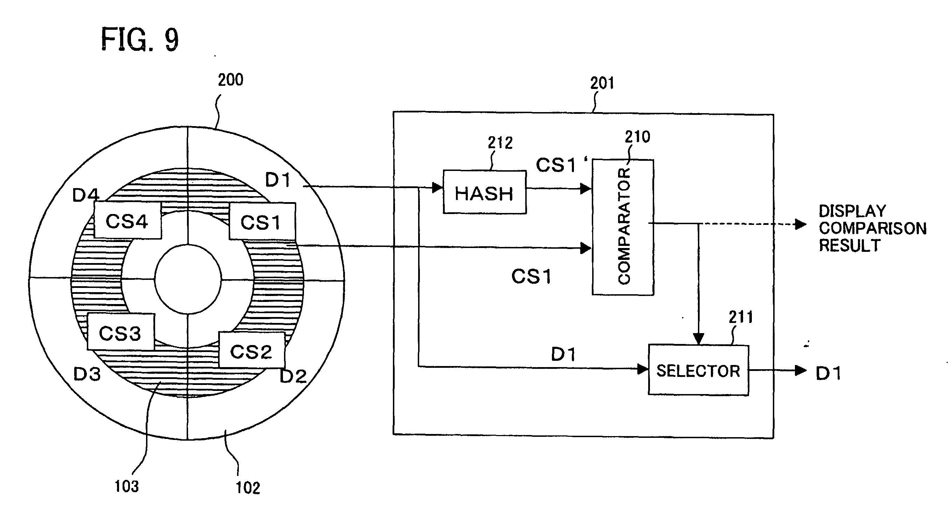

Fig. 9 is a first embodiment of the security system whose optical information recording medium itself is distributed to users.

In the optical information recording medium 200, plain text data (D1 to D4) is stationarily recorded in the ROM region 102 in units of a frame. Checksums (CS1 to CS4) of plain text data are recorded as RAM signal in the magneto-optical recording film 103 correspondingly with this plain text data.

The user's storage apparatus is provided with a plain text tampering verification module 201. Having means 212 for reading out plain text data and finding checksums, the plain text tampering verification module 201 finds a hash function as an embodiment.

Next, the comparator 210 compares checksums found by the checksum finding means 212 and frame-by-frame checksums (CS1 to CS4), stored in the magneto-optical recording film 103, that are read out simultaneously with and correspond to plain text data.

When the comparator 210 detects a match, the selector 211 is controlled so as to send out the plain text data (D1 to D4) stored in the ROM region 102. On the other hand, if the comparator 210 does not detect a match, an alarm is output and displayed as a comparison result, with output of the encrypted data C1 blocked by the selector 211.

Thus, plain text data and checksums can be verified while simultaneously reading out both.

The aforementioned system allows the user to successively verify the plain text data (D1 to D4) stored in the optical information recording medium during readout for use to determine whether any has been tampered, thus processing only genuine plain text data.

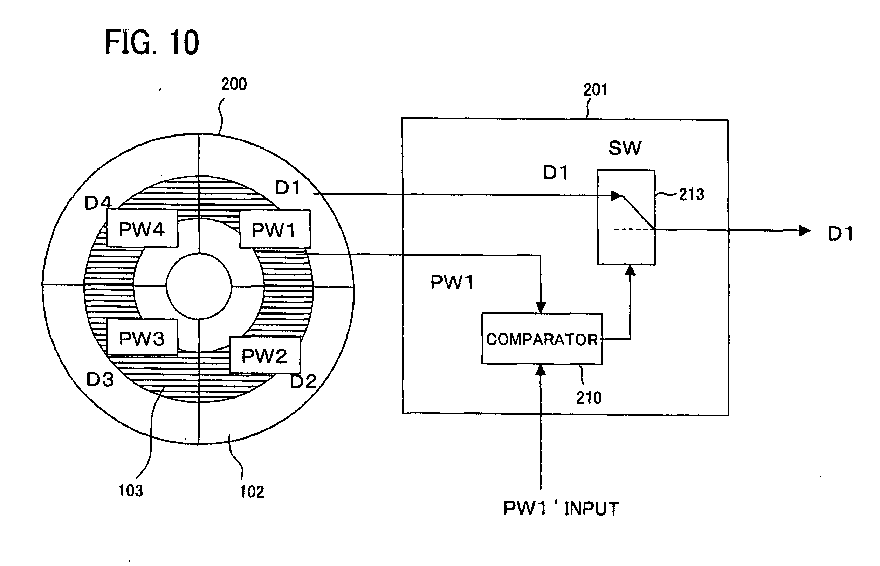

Fig. 10 is an example of a system to which the present invention has been applied that allows verifying whether those attempting access to the optical information recording medium are genuine users. In the optical information recording medium 200 distributed to users, the plain text data (D1 to D4) is stationarily recorded in the ROM region 102 in units of a frame.

Further, passwords (PW1 to PW4) permitting access to the plain text data are recorded in the magneto-optical recording film 103 as RAM signal correspondingly with the plain text data.

The user's storage apparatus is provided with the password verification module 201. The password verification module 201 reads out the plain text data from the ROM region 102 and feeds it to a selector switch 213.

Further, the user's storage apparatus has the password comparator 210, reading out the passwords (PW1 to PW4) corresponding to the frame-by-frame plain text data (D1 to D4) stored in the magneto-optical recording film 103 together with the plain text data and compares the passwords with that entered by the user.

When the password comparator 210 detects a match, the selector switch 213 is controlled so as to send out the plain text data (D1 to D4) stored in the ROM region 102. The output of the selector switch is displayed on a display device not shown in the figures, thus allowing the genuine user to perform processing. Thus, plain text data and passwords can be verified while simultaneously reading out both.

Such a system allows genuine users to readily manage security of plain text data - private information - using a privately owned password.

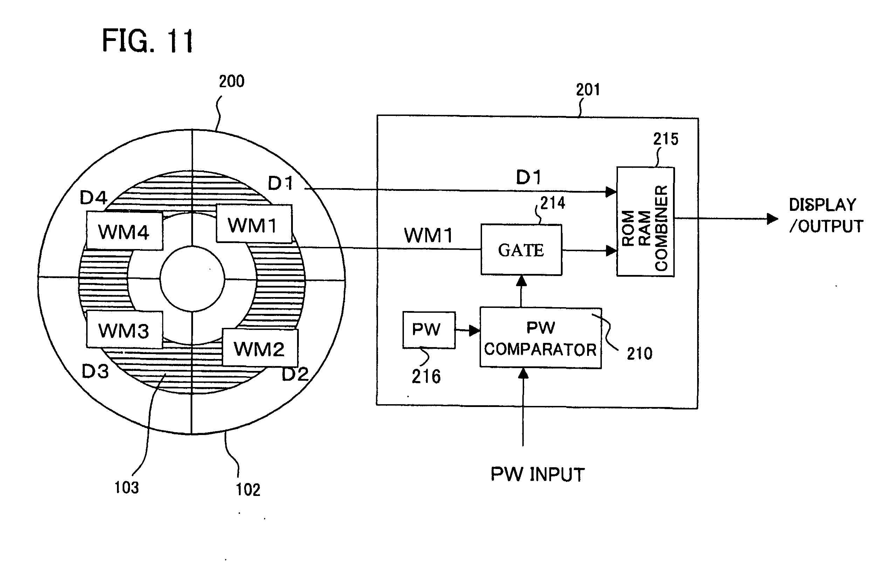

Fig. 11 is an application example in which the embodiment of Fig. 10 has undergone further development. In the optical information recording medium 200 distributed to users, the plain text data (D1 to D4) is stationarily recorded in the ROM region 102 in units of a frame.

Further, watermarks (WM1 to WM4) permitting access to the plain text data are recorded in the magneto-optical recording film 103 as RAM signal correspondingly with the plain text data. It is to be noted that, in the present embodiment, the region of the magneto-optical recording film 103 where the watermarks (WM1 to WM4) are recorded is inaccessible.

The user's storage apparatus is provided with the watermark verification module 201. The watermark verification module 201 reads out the plain text data from the ROM region 102 and feeds it to a ROM-RAM combiner 215.

Further, the user's storage apparatus has the password comparator 210, comparing a password (PW) entered by the administrator with a registered password PW stored in advance in a password registration memory 216 and, when a match is found, reading out the watermarks (WM1 to WM4), stored in the magneto-optical recording film 103, that correspond to the plain text data (D1 to D4) in units of a frame and feeding them to a gate 214.

The comparator 210 determines a match between the password (PW) entered by the administrator and a password stored in the non-access area 100 or the password PW registered in the password registration memory 216. When it is determined that there is a match, the gate 214 opens, feeding the read-out watermark to the ROM-RAM combiner 215.

The ROM-RAM combiner 215 combines the plain text data read out from the ROM region 102 and the watermark simultaneously read out from the RAM region and outputs and displays the data. Thus, plain text and watermark can be simultaneously combined.

In the embodiment shown in Fig. 11, no watermark bits are assigned to data bits in the ROM region 102 of a data area, thus resulting in no degradation due to reproduction of watermark bits. Further, it is possible to implement a watermark system, which can be easily detected.

The aforementioned verifications in a concurrent ROM-RAM provide greater efficiency in time, allowing quick output (transmission) processing. It is to be noted that P-ROM may be used as MO.

Here, a description will be made of a preferred configuration example of a storage apparatus provided on the sending side or the user on the receiving side to which the aforementioned embodiments are applicable, namely, a storage apparatus suited to concurrent readout of original data from the ROM region 102 of the optical information recording medium and encrypted data (Fig. 8), checksums (Fig. 9), passwords (Fig. 10) or watermarks (Fig. 11) from the magneto-optical recording film 103.

Here, the configuration is preferred for the following reasons. The optical information recording medium described earlier as the prior art having ROM and RAM information on the same recording surface faces a number of challenges in concurrently reproduction ROM information consisting of phase bits PP and RAM information consisting of the magneto-optical records OMM. First of all, to stably reproduce RAM information together with ROM information, it is necessary to reduce optical intensity modulation taking place during readout of ROM information.

In the prior art described in the Japanese Patent Application Laid-Open Publications and the document cited earlier, therefore, optical intensity modulated signal resulting from ROM information readout is reduced by negatively feeding back the signal to the readout drive laser (hereinafter referred to as "MPF (Modulated Power Feedback)").

However, if the magnitude of optical intensity modulation of ROM information is large, the prior art alone is not enough. That is, in reducing optical intensity modulation caused by ROM information, excessive reduction will lead to a smaller reproduction margin for ROM information itself.

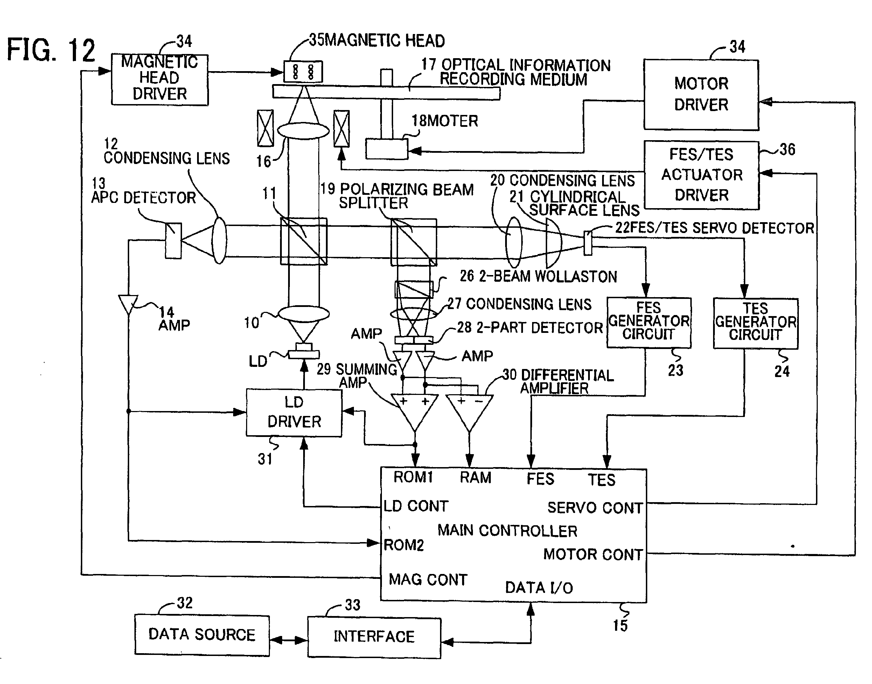

Fig. 12 is, therefore, a block diagram of a configuration of a storage apparatus suited to concurrent readout of original data and encrypted data (Fig. 8), checksums (Fig. 9), passwords (Fig. 10) or watermarks (Fig. 11) from the magneto-optical recording film 103 when the storage apparatus, capable of reducing impact of optical intensity modulation caused by ROM information, is employed for the security system using optical information recording medium according to the present invention.

In Fig. 12, laser beam, a light beam emitted from the semiconductor laser diode LD (wavelength: 785nm) that serves as a light source, is converted to parallel luminous flux by a collimator lens 10.

Next, the converted parallel luminous flux enters a polarizing beam splitter 11. Light reflected by the polarizing beam splitter 11 is made to enter a photodetector 13 for auto power control (APC) by a condensing lens 12. Detected electric signal that has undergone photo-electrical conversion by the photodetector 13 is guided into a main controller 15 via an amplifier 14 for use in APC control or ROM signal reproduction.

On the other hand, after passing through the polarizing beam splitter 11, the flux is reduced roughly to the diffraction limit by an objective lens 16 and irradiated to an optical information recording medium 17 according to the present invention. The optical information recording medium 17 is rotated by the motor 18. Further, the luminous flux reflected by the optical information recording medium 17 enters the polarizing beam splitter 11 again via the objective lens 16, where the flux is reflected and guided into a servo optical system and a recording information detection system.

That is, reflected light from the optical information recording medium 17 reflected by the polarizing beam splitter 11 enters a second polarizing beam splitter 19, and transmitted light therefrom enters the servo optical system, whereas light reflected by the second polarizing beam splitter 19 enters the recording information detection system.

Transmitted light from the second polarizing beam splitter 19 enters a 4-part photodetector 22 via a condensing lens 20 and a cylindrical lens 21 in the servo optical system, undergoing photo-electrical conversion in the 4-part photodetector 22.

Using the output of the 4-part photodetector 22 following photo-electrical conversion, focus error sensing (FES) is conducted by a generator circuit 23 through astigmatic focus error detection. At the same time, track error sensing (TES) is conducted by a generator circuit 24 through push-pull method.

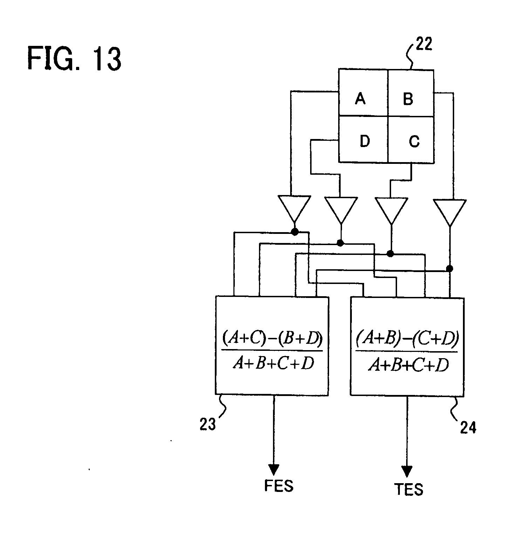

Fig. 13 shows the relationship between the 4-part photodetector 22, the generator circuit 23 based on astigmatic focus error detection for performing focus error sensing (FES) and the generator circuit 24 based on push-pull method for performing track error sensing (TES), with both circuits performing sensing based on the output of the photodetector.

Letting transmitted lights from the second polarizing beam splitter 19, split into four by the 4-part photodetector 22, be A, B, C and D, the generator circuit 23 based on astigmatic focus error detection for performing focus error sensing (FES) finds focus error (FES), a control error along the optical axis of the objective lens 16, from the following equation:

$$FES=\frac{(A+C)\text{-}(B+D)}{A+B+C+D}$$

On the other hand, the generator circuit 24 based on push-pull method for performing track error sensing (TES) finds track error (TES), a control error in the direction perpendicular to the optical axis of the objective lens 16, from the following equation:

$$TES=\frac{(A+B)\text{-}(C+D)}{A+B+C+D}$$

Focus error signal (FES) and track error signal (TES) found from these calculations are fed to the main controller 15.

In the recording information detection system, on the other hand, reflected laser light enters a 2-beam wollaston 26 in the recording information detection system, converting the polarization characteristic of reflected laser beam - a characteristic that changes according to the orientation of the magneto-optical records on the optical information recording medium 17 - to optical intensity.

That is, reflected laser light is split into two beams, whose polarization directions are orthogonal to each other, by the 2-beam wollaston 26 due to polarization detection, causing the beams to enter the 2-part photodetector 28 via the condensing lens 27 for photo-electrical conversion of each.

Two electric signals resulting from photo-electrical conversion in the 2-part photodetector 28 are added together by a summing amplifier 29 to serve as a first ROM signal (ROM1), while at the same time they are subtracted from each other by a subtracting amplifier 30 to serve as the RAM readout signal (RAM), with both signals fed to the main controller 15.

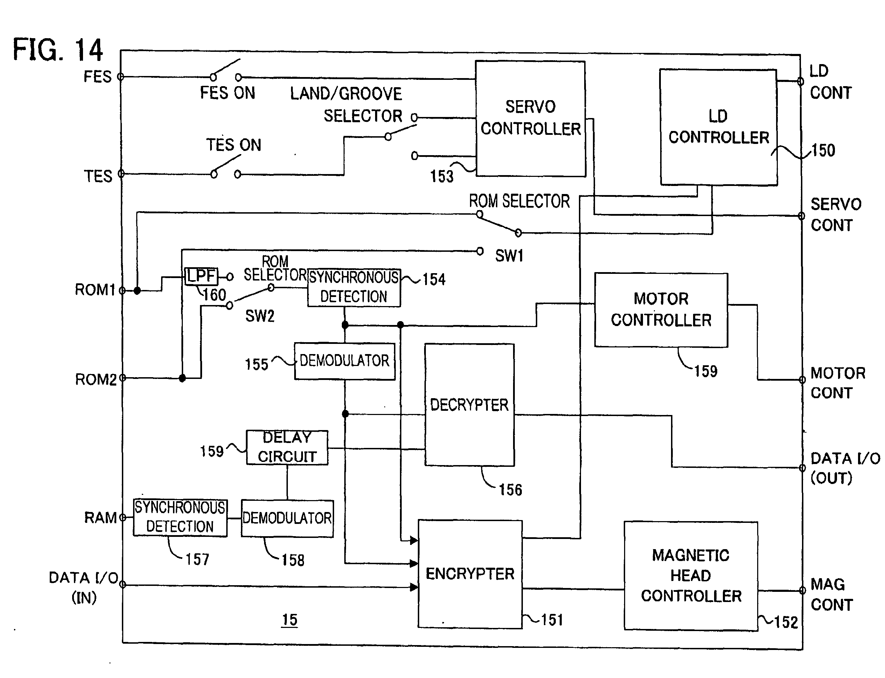

The description has so far focused primarily on the flow of luminous flux during readout. Next, a description will be given of the flow of output signals from the photodetectors with reference to a detailed configuration example of the main controller 15 shown in Fig. 14.

In Fig. 14, the main controller 15 receives, as an input and via the amplifier 14, a second ROM signal (ROM2) resulting from photo-electrical conversion of reflected light from the semiconductor laser diode LD that enters the APC photodetector 13.

Further, as described earlier, the main controller 15 receives, as inputs, the first ROM signal (ROM1) - the output of the summing amplifier 29, a RAM signal (RAM) - the output of the differential amplifier 30, the focus error signal (FES) from the FES generator circuit 23 and the track error signal (TES) from the TES generator circuit 24.

Moreover, recording data and read-out data are exchanged with a data source 32 via an interface circuit 33.

The first ROM signal (ROM1), the second ROM signal (ROM2) and the RAM signal (RAM) input to the main controller 15 are detected for use in accordance with the modes, namely, concurrent ROM and RAM reproduction, ROM reproduction only and recording (WRITE).

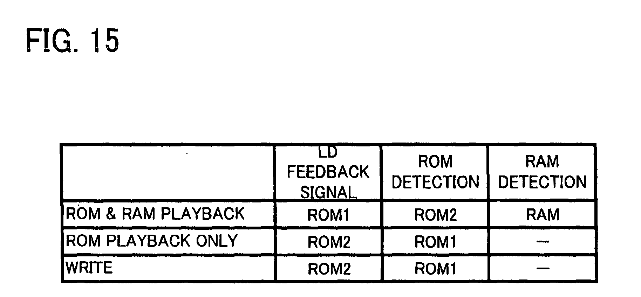

Fig. 15 is a view showing combinations of ROM1, ROM2 and RAM detection in individual modes. The main controller 15 shown in Fig. 15 has ROM selector switches SW1 and SW2 for such combinations of ROM1, ROM2 and RAM detection in individual modes.

The statuses of the ROM selector switches SW1 and SW2 shown in Fig. 14 are those during ROM and RAM reproduction among the modes shown in Fig. 15. During ROM reproducing only and recording, the statuses of the ROM selector switches SW1 and SW2 shown in Fig. 14 are individually inverted.

An LD controller 150 in the main controller 15 generates a command signal for an LD driver 31 in response to outputs of an encrypter 151 and the ROM selector switch SW1.

In response to the command signal generated by the LD controller 150, the LD driver 31 performs, in the case of ROM and RAM reproduction, negative feedback control of emission power of the semiconductor laser diode LD in accordance with the first ROM signal (ROM1) and does so, in the case of ROM reproducing alone and recording, in accordance with the second ROM signal (ROM2).

A description will be given next of reproduction operation in such a configuration. It has already been discussed that optical intensity modulation caused by phase pit signal, namely, ROM information that is original data to be read out, turns into noise for RAM signal.

As with the method employed in the prior art shown earlier, therefore, it is possible to reduce and flatten the first ROM signal (ROM1) by negatively feeding back the first ROM signal (ROM1) from the summing amplifier 29 to the semiconductor laser diode LD via the LD driver 31 and by controlling emission.

Such an embodiment effectively suppresses crosstalk to the RAM signal to be read out. In the case of concurrent readout of ROM and RAM signals, however, the ROM1 signal becomes flat as a result of negative feedback control as described above, making it difficult to obtain the ROM signal.

Therefore, the ROM signal must be detected by an alternative method. In the embodiment of the present invention, injection current to the semiconductor laser diode LD is modulated through negative feedback by the first ROM signal (ROM1) during reproduction. That is, the current is optical intensity-modulated in the same pattern as with the ROM signal.

This optical intensity modulation can be detected by the APC photodetector 13. Turning off the APC loop during MPF loop operation allows the phase pit signal to be obtained as the second ROM signal (ROM2).

In the present invention, therefore, a clock is reproduced from this second ROM signal (ROM2) by a synchronous detection circuit 154 and demodulated by a demodulator 155 correspondingly with EFM magnetic field modulation in the main controller 15 shown in Fig. 15, thus obtaining ROM information. Demodulated ROM information is further decrypted by a decrypter 156 correspondingly with encryption by the encrypter 151, thus sending out ROM information as reproduction data.

During concurrent reproduction of ROM and RAM information, rotation of the motor 18 is controlled by the motor driver 36 as part of the seek motion via the motor controller 159 based on the clock reproduced from the second ROM signal (ROM2) obtained from the synchronous detection circuit 154.

The RAM signal can be detected interference-free with the ROM signal as the output of the differential amplifier 30 by ROM signal negative feedback means including the LD driver 31 to the semiconductor laser diode LD.

The output of the differential amplifier 30 is synchronously detected by a synchronous detection circuit 157, demodulated by a demodulator 158 correspondingly with NRZI modulation and decrypted by the decrypter 156 in the main controller 15, thus sending out the output as the RAM signal.

INDUSTRIAL APPLICABILITY

As set forth hereinabove, the present invention stationarily records, using an optical information recording medium capable of concurrent readout of ROM and RAM information, original data in the ROM region thereof, and simultaneously records data for ensuring security in the RAM region. This allows providing a system with security ensured in data delivery.

**Claims**

1. A security system capable of receiving data from an optical information recording medium having an identification symbol recording region recording an identification symbol identifying the medium, a ROM region recording plain text data, and a magneto-optical recording film formed in a region corresponding to the ROM region, the magneto-optical recording film recording encrypted data of the plain text data, the security system being configured such that the recording medium recording a decryption program for decrypting the encrypted data is usable, the security system comprising:

    a reception unit for receiving the encrypted data in response to a data transmission request that conforms to the identification symbol identifying the optical information recording medium;
    a recording unit for recording in the recording medium the encrypted data received from the reception unit; and
    a decryption unit for decrypting with the decryption program the encrypted data recorded in the recording medium.

2. The security system according to claim 1, wherein the encrypted data is decrypted using key data stored in the recording medium.

3. The security system according to claim 1, wherein the security system is further configured to transmit data in the optical information recording medium using the optical information recording medium, wherein

    the security system further comprises:

    an encryption unit for encrypting plain text data read out from the ROM region of the optical information recording medium; and

    a comparison unit for comparing encrypted data encrypted by the encryption unit with the encrypted data stored in the optical information recording medium, and wherein

    when the comparison unit detects a match, the encrypted data stored in the optical information recording medium is transmitted.

4. The security system according to claim 3, wherein match detection between encrypted data in the comparison unit and the encrypted data stored in the optical information recording medium is conducted on a frame-by-frame basis of the plain text data.

5. A security system using an optical information recording medium, capable of using the optical information recording medium having a substrate with a ROM region where phase pits serving as a ROM signal are formed and a magneto-optical recording film formed in a region corresponding to the ROM region of the substrate, the optical information recording medium retaining plain text data stationarily recorded in the ROM region and encrypted data corresponding to the plain text data recorded in the magneto-optical recording film, the security system comprising:

    an encryption processing verification module, which includes, for verification of encryption processing of the plain text data,
    an encryption unit for encrypting plain text data read out from the ROM region, and
    a comparison unit for comparing encrypted data encrypted by the encryption unit with the encrypted data stored in the magneto-optical recording film.

6. A security system using an optical information recording medium, capable of using the optical information recording medium having a substrate with a ROM region where phase pits serving as a ROM signal are formed and a magneto-optical recording film formed in a region corresponding to the ROM region of the substrate, the optical information recording medium retaining data stationarily stored in the ROM region and checksums of the data recorded in the magneto-optical recording film, the security system comprising:

    a plain text tampering verification module, which includes, for verification of tampering of the data,
    a checksum processing unit for reading out data from the ROM region and calculating checksums, and
    a comparison unit for comparing the checksums calculated by the checksum processing unit and the checksums stored in the magneto-optical recording film.

7. A security system capable of using the optical information recording medium having a substrate with a ROM region where phase pits serving as a ROM signal are formed and a magneto-optical recording film formed in a region corresponding to the ROM region of the substrate, the optical information recording medium retaining data stably recorded in the ROM region and passwords for the data recorded in the magneto-optical recording film, the security system further comprising:

a password verification module which includes at least,
a comparison unit for comparing the passwords stored in the magneto-optical recording film with a password entered by a user, wherein

when a password match is detected by the comparison unit, data is sent out from the ROM region of the optical information recording medium.

8. The security system using an optical information recording medium according to claim 7, wherein the passwords stored in the magneto-optical recording film of the optical information recording medium are watermarks of data bits of the data stored in the ROM region of the optical information recording medium, and wherein when a password match is detected by the comparison unit, the data and the watermarks are combined and sent out.

9. The security system according to claim 1 wherein the recording medium has a non-access area inaccessible by users, the non-access area storing at least one of the decryption program and key data.

10. A security system capable of using an optical information recording medium having a ROM region where phase pits serving as a ROM signal are formed and a magneto-optical recording film formed in a region corresponding to the ROM region, the optical information recording medium including an identification symbol recording region where an identification symbol identifying the medium is recorded, the optical information recording medium retaining plain text data stationarily recorded in the ROM region and encrypted data of the plain text data recorded in the magneto-optical recording film, the security system comprising:

a transmission unit for transmitting the encrypted data recorded in the magneto-optical recording film in response to a data transmission request that conform to the identification symbol identifying the optical information recording medium.

11. The security system according to claim 10, wherein the optical information recording medium has a non-access area inaccessible by users, the non-access area storing at least one of encryption program, decryption program and key data.

12. A security system capable of using an optical information recording medium having a ROM region where phase pits serving as ROM signal are formed and a magneto-optical recording film formed in a region corresponding to the ROM region, the security system comprising:

an encryption processing unit for encrypting plain text data of ROM signal read out from the optical information recording medium; and
a recording unit for recording the data encrypted by the encryption processing unit in the magneto-optical recording film of the optical information recording medium.

**10**

FIG. 1

FIG. 2

FIG. 3

F

E

D

C

B

A

GROOVE 4

LAND 5

# FIG. 4

PP

F
E
D
C
B
A

# FIG. 5

A

B

OMM

PP

## FIG. 6B

101

104

## FIG. 6A

100

103

102

FIG. 7

START

DISTRIBUTE RAM
RECORDING
MEDIUM IN
ADVANCE — P1

SEND MEDIUM
IDENTIFICATION
SYMBOL TO
SENDING SIDE — P2

DELIVER
ENCRYPTED DATA — P3

WRITE RECEIVED
DATA TO RAM AREA — P4

LOAD DECRYPTION
PROGRAM — P5

READ OUT AND
DECRYPT RAM AREA
DATA — P6

SEND OUT
DECRYPTED DATA — P7

END

FIG. 8

200

201

212

210

C1'

D1

ENCRIPTION

COMPARATOR

DISPLAY
COMPARISON
RESULT

D4

C4    C1

211

C3

C2    C1    SELECTOR    C1

D3    D2

103    102

EP 1 467 366 A1

# FIG. 9

# FIG. 10

200

201

SW

D1

~213

D1

D4

PW4

PW1

PW1

COMPARATOR

PW3

PW2

210

D3

D2

103

102

PW1 'INPUT

EP 1 467 366 A1

# FIG. 11

DISPLAY /OUTPUT

PW INPUT

EP 1 467 366 A1

EP 1 467 366 A1

FIG. 12

20

FIG. 13

$$\frac{(A+B)-(C+D)}{A+B+C+D}$$

24

TES

$$\frac{(A+C)-(B+D)}{A+B+C+D}$$

23

FES

22

| A | B |
|---|---|
| D | C |

# FIG. 14

EP 1 467 366 A1

# FIG. 15

| | LD FEEDBACK SIGNAL | ROM DETECTION | RAM DETECTION |
|---|---|---|---|
| ROM & RAM PLAYBACK | ROM1 | ROM2 | RAM |
| ROM PLAYBACK ONLY | ROM2 | ROM1 | — |
| WRITE | ROM2 | ROM1 | — |

## INTERNATIONAL SEARCH REPORT

| International application No. |
|---|
| PCT/JP03/00144 |

| A. CLASSIFICATION OF SUBJECT MATTER |
|---|
| Int.Cl⁷ G11B20/10, G11B7/30, G11B11/105, G06F12/14 |

According to International Patent Classification (IPC) or to both national classification and IPC

| B. FIELDS SEARCHED |
|---|

Minimum documentation searched (classification system followed by classification symbols)
Int.Cl⁷ G11B20/10, G11B7/30, G11B11/105, G06F12/14

Documentation searched other than minimum documentation to the extent that such documents are included in the fields searched

| Jitsuyo Shinan Koho | 1922–1996 | Toroku Jitsuyo Shinan Koho | 1994–2003 |
|---|---|---|---|
| Kokai Jitsuyo Shinan Koho | 1971–2003 | Jitsuyo Shinan Toroku Koho | 1996–2003 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y | JP 11-219320 A (Toshiba Corp.), 10 August, 1999 (10.08.99), Full text; Figs. 1 to 17 (Family: none) | 1-12 |
| Y | JP 6-202820 A (Deutsche Thomson Brandt GmbH.), 22 July, 1994 (22.07.94), Full text; Figs. 1 to 3 & EP 000575934 A2 & DE 004220486 A | 1-12 |
| Y | JP 2001-243706 A (Ricoh Co., Ltd.), 07 September, 2001 (07.09.01), Full text; Figs. 1 to 6 (Family: none) | 1-12 |
| Y | JP 11-312364 A (Mitsubishi Electric Corp.), 09 November, 1999 (09.11.99), Full text; Figs. 1 to 10 (Family: none) | 6 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 02 April, 2003 (02.04.03) | 15 April, 2003 (15.04.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

## INTERNATIONAL SEARCH REPORT

| International application No. |
|---|
| PCT/JP03/00144 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 4-356760 A  (Xerox Corp.),<br>10 December, 1992 (10.12.92),<br>Full text; Figs. 1 to 7<br>& US 005027396 A | 7,9,11 |

Form PCT/ISA/210 (continuation of second sheet) (July 1998)